# EUROPEAN PATENT APPLICATION

(11) **EP 4 843 753 A1**
(43) Date of publication of application: **25.11.2026**
(21) Application number: 26178570.3
(22) Date of filing: 13.05.2026
(51) Int. Cl.: B29C 65/08, B29C 65/74, B65B 51/22, B29C 65/36, B29K 23/00, B29K 705/02, B29L 31/00

(54) **ANVIL FOR A SEALING SYSTEM OF A PACKAGING MACHINE, CORRESPONDING SEALING SYSTEM, PACKAGING MACHINE, AND METHOD OF PRODUCING SEALED PACKAGES USING A PACKAGING MACHINE**

(30) Priority: 22.05.2025 IT 202500011662
(71) Applicant: Tetra Laval Holdings & Finance S.A., 1009 Pully (CH)
(72) Inventor: CUOGHI, Lorenzo, 41123 MODENA (IT); FENU, Fabrizio, 41123 MODENA (IT); GENTILI, Luca, 41123 MODENA (IT); SIGHINOLFI, Fabrizio, 41123 MODENA (IT); ORSINI, Ivan, 41123 MODENA (IT); FERRARI, Mauro, 41123 MODENA (IT); FEDERZONI, Giovanni, 41123 MODENA (IT); MELLI, Virginia, 41123 MODENA (IT)
(74) Representative: Tetra Pak Patent Attorneys

(57) **Abstract**

An anvil (22) for a sealing system (20) of a packaging machine (1) includes an anvil surface (32a, 32b) extending in a sealing plane defined by a transversal direction (TD) and a longitudinal direction (LD), predominantly along the transversal direction (TD). A cooling duct (64a, 64b) extends within the body of the anvil (22) along the transversal direction (TD) underneath the anvil surface (32a, 32b).

Preferably, the cooling duct (64a, 64b) has a cross section, perpendicular to said transversal direction (TD), which is elongated in the longitudinal direction (LD).

The anvil surface (32a, 32b) may comprises a raised contact portion (68a, 68b) and a recessed portion (69a, 69b) extending along the transversal direction (TD), wherein a thickness of a wall of the anvil (22) between said anvil surface (32a, 32b) and an inner surface of the cooling duct (64a, 64b) facing towards the anvil surface (32a, 32b) is constant.

## Description

### Technical Field

The present application relates to the field of packaging technology. More particularly, it relates to an anvil for a sealing system of a packaging machine (in particular, a transversal sealing system), a sealing system including such an anvil, a packaging machine including such a sealing system, as well as a method of producing sealed packages using such a packaging machine.

### Background art

Many pourable food products (e.g., liquid or powdered or granular food products), such as fruit juice, UHT (ultra-high-temperature treated) milk, wine, tomato sauce, salt, sugar and the like, are sold in sealed packages made of sterilized packaging material.

An example is the parallelepiped-shaped package for pourable food products known as Tetra Brik^{®} Aseptic, which is made by sealing and folding a laminated strip packaging material. The packaging material has a multilayer structure comprising one or more stiffening and strengthening core layers (typically made of a fibrous material such as carton and/or paper, or mineral-filled polypropylene material), covered on both sides with layers of heat-sealable material (e.g., polyethylene). In the case of aseptic packages for long-storage products, the packaging material may also comprise a layer of gas- and/or light-barrier material (e.g., aluminum foil or ethyl vinyl alcohol (EVOH) film), which is superimposed on one of the layers of heat-sealable material, and is in turn covered with another layer of heat-sealable material forming the inner face of the package that eventually contacts the food product.

Packages of this type are normally produced by fully automatic packaging machines, which are known for instance from documents EP 4070935 A1 and EP 4461511 A1. These documents describe various features for which protection may be sought in connection with the present invention, and are thus incorporated herein by reference in their entirety for that purpose.

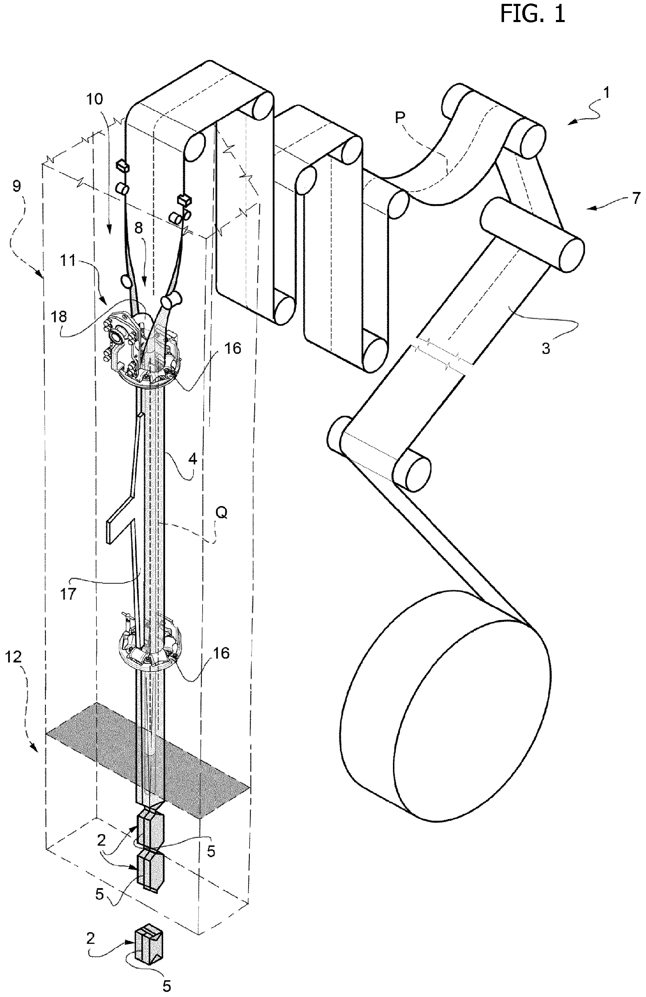

In particular, with reference to Figures 1 to 4, number 1 indicates as a whole a packaging machine for producing sealed packages 2 containing a pourable food product and made of a composite multilayer packaging material, provided in the form of a web 3. In brief, the packaging machine 1 may be configured to produce packages 2 by unrolling the web 3 of packaging material from a reel, forming a tube 4 from web 3, longitudinally sealing tube 4, filling tube 4 with the pourable product, and transversally sealing and cutting tube 4. Therefore, a typical package 2 produced by packaging machine 1 comprises a longitudinal seam portion 5, a first transversal sealing band 6a, and a second transversal sealing band 6b. The transversal sealing bands are arranged along a transversal direction TD of the package 2 at opposite sides of package 2 with respect to its longitudinal direction LD, which corresponds to the advancement direction of tube 4 along the processing path of the packaging machine 1. In particular, the first transversal sealing band 6a may define a transversal top sealing band and the second transversal sealing band 6b may define a transversal bottom sealing band. It is noted that the packages 2 are flipped when coming out of the packaging machine, so that the top of a parallelepiped-shaped package corresponds to the bottom sealing band 6b, and the bottom of a parallelepiped-shaped package corresponds to the top sealing band 6a.

With particular reference to Figure 1, packaging machine 1 may comprise:
- a conveying device 7 for advancing (in a known manner) web 3 along a web advancement path P to a tube forming station 8, at which, in use, web 3 is formed into tube 4;
- an isolation chamber 9 having an inner environment, in particular an inner (harsh) sterile environment containing a sterile gas, and being separated from an outer environment;
- a tube forming and sealing device 10, positioned at least partially in the isolation chamber 9 and configured to form tube 4 from the, in use, advancing web 3 within the sterile environment and to longitudinally seal tube 4 within the sterile environment;
- a filling device 11 for continuously filling tube 4 with the pourable product; and
- a package forming apparatus 12 configured to form, transversally seal and transversally cut the, in use, advancing tube 4 for forming packages 2.

Moreover, the packaging machine 1 may comprise a sterilizing unit configured to sterilize the, in use, advancing web 3 at a sterilization station, in particular the sterilization station being arranged upstream of the tube forming station 8 along web advancement path P.

In more detail, conveying device 7 may be configured to advance tube 4 and any intermediates of tube 4 along a tube advancement path Q, in particular from the tube forming station 8 to the package forming apparatus 12. In particular, under "intermediates of tube 4" any configuration of web 3 is meant prior to obtaining the tube structure and after folding of web 3 by tube forming and sealing device 10 has started. In other words, the intermediates of tube 4 are a result of the gradual folding of web 3 so as to obtain tube 4, in particular by overlapping the longitudinal edges of web 3 with one another.

Preferably, tube forming and sealing device 10 may be arranged such that tube 4 has a vertical orientation.

In more detail, tube forming and sealing device 10 may comprise at least two forming ring assemblies 16, in particular arranged within isolation chamber 9, being configured to gradually fold in cooperation with one another web 3 into tube 4, in particular by overlapping the edges of web 3 with one another. Thereby, in use, a longitudinal seam portion 5 of tube 4 is formed.

Additionally, tube forming and sealing device 10 may comprise a longitudinal sealing head 17, in particular arranged within isolation chamber 9, and configured to longitudinally seal tube 4, in particular along seam portion 5.

Moreover, tube forming and sealing device 10 may also comprise a pressuring assembly configured to exert a mechanical force on seam portion 5 so as to ensure sealing of tube 4 along seam portion 5.

Additionally, filling device 11 may comprise a filling pipe 18 being configured to direct, in use, the pourable product into tube 4. In particular, filling pipe 18 may, in use, be at least partially placed within tube 4 for feeding, in use, the pourable product into tube 4.

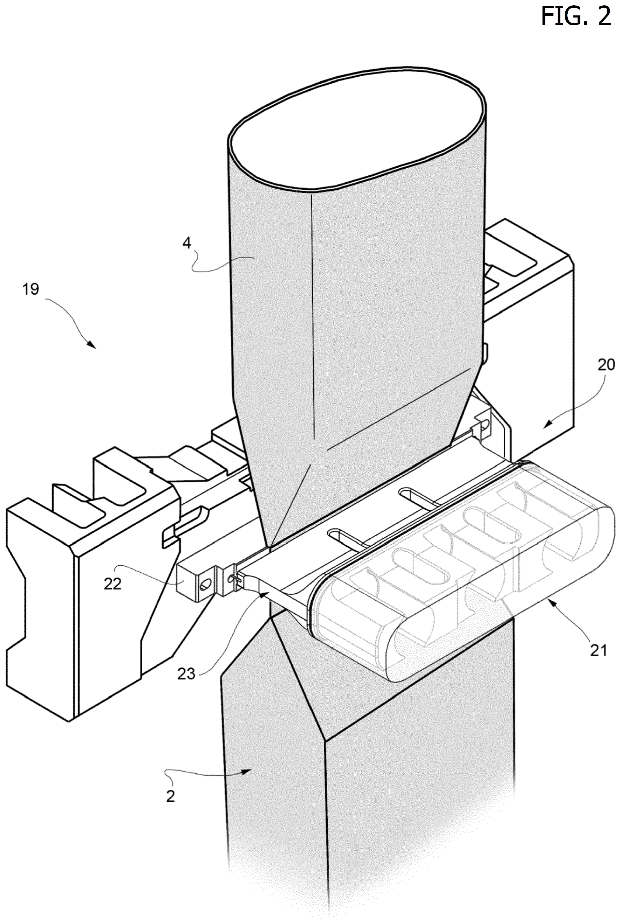

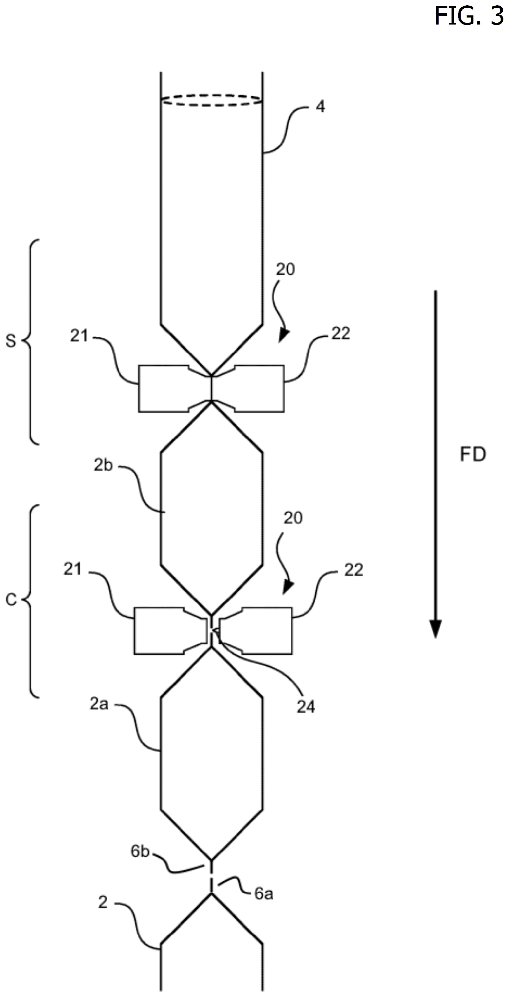

With particular reference to Figures 2 and 3, package forming apparatus 12 may comprise:
- one or more (e.g., a pair of) forming and sealing assemblies 19 (only partially shown to the extent necessary for the comprehension of the background of the present invention in Figure 2), each one configured to form (shape) tube 4, transversally seal tube 4, and transversally cut tube 4; and
- a conveying unit (not shown and known as such) so as to advance the forming and sealing assemblies 19 along the longitudinal direction LD.

In particular, package forming apparatus 12 is configured to control forming and sealing assemblies 19 and the conveying unit such as to transversally seal and cut tube 4 along equally-spaced transversal cross sections.

In more detail, each forming and sealing assembly 19 may comprise:
- a forming shell (not shown and known as such) configured to at least partially define the shape of packages 2; and
- a transversal sealing system 20 configured to transversally press, in particular flat-lay and squeeze, and to transversally seal tube 4, in particular during advancement of tube 4 along path Q and between two respective packages 2.

Moreover, each forming and sealing assembly 19 may comprise a cutting device (not shown) for transversally cutting tube 4.

In particular, each transversal sealing system 20 is configured to form a main sealing band and the respective cutting device is configured to transversally cut through the main sealing band. Even more particularly, each main sealing band combines the respective first transversal sealing band 6a of a leading package 2a and the respective second transversal sealing band 6b of the successive package 2b.

In further detail, each forming shell may comprise at least a first half-shell (not shown and known as such) and a second half-shell (not shown and known as such) configured to at least partially define in cooperation the shape of packages 2. In particular, the first half-shell and the second half-shell are configured to contact tube 4 from opposite sides thereof.

In more detail, each transversal sealing system 20 may be of the ultrasonic type, that is, transversal sealing system 20 may be configured to generate ultrasonic vibrations suited to heat portions of the layers of heat-sealable material. Therefore, each transversal sealing system 20 may comprise at least:
- an ultrasonic generating device 21 (oscillating transducer or sonotrode in brief) for generating ultrasonic vibrations, in particular for heating/melting the portions of the layers of heat-sealable material that are located in the area of the main sealing band via a sonotrode head 23; and
- a (rigid or non-deformable) anvil 22 for pressing, in particular for locally flat-lying (e.g., flattening) and squeezing, in cooperation with sonotrode 21 (and in particular with the sonotrode head 23), tube 4; the anvil 22 is fixed to, and is carried by, a support 24, and the anvil 22 with the support 24 may be referred to as counter-sealing element 25 altogether.

In further detail, each cutting device 26 comprises at least one moveable blade so as to transversally cut tube 4. For instance, the moveable blade may pass through transversal slits provided in the anvil 22 and/or in the sonotrode head 23.

Furthermore, each sonotrode 21 is associated to one respective first half-shell, in particular defining a first operative portion of the respective forming and sealing assembly 19, and each anvil 22 is associated to one respective second half-shell, in particular defining a second operative portion of the respective forming and sealing assembly 19. The blade of the cutting device is associated to the sonotrode 21 or to the anvil 22, preferably to the anvil 22. In other words, each cutting device is either associated to the respective first operative portion or the respective second operative portion, in the specific case shown to the respective second operative portion.

Furthermore, the conveying unit may be configured to advance the respective first operative portions along a first path and the respective second operative portions along a second path. Moreover, each first operative portion and the respective second operative portion may be configured to cooperate with one another for forming a package 2 when advancing along a respective operative section of the first path and the second path, respectively. The parts of the forming and sealing assembly 19 (e.g., the sonotrode 21, the anvil 22 and any other optional parts) can be moved together with the tube 4 in a feeding direction FD (corresponding to the longitudinal direction LD) during the sealing stage S and the cutting stage C.

An advantage of using ultrasonic sealing technology compared to induction sealing technology, sometimes referred to as induction heating technology, is that the ultrasonic sealing technology does not require an electrically-conductive material in the packaging material, such as an aluminum foil. Thus, the packaging material can be more cost-efficient and environmentally friendly. However, it has been noted that applying the ultrasonic sealing technology to aluminum-free packaging material may be troublesome, insofar as the heat generated for transversally sealing the packages is dissipated less efficiently (e.g., more slowly) by the packaging material, and the heat-sealable material takes more time to solidify after having been melted, which should take place before the package is released from the forming and sealing assembly. This may result in a lower quality of the transversal sealing and/or in the need for the packaging machine to operate at a lower speed.

Therefore, even though the known transversal sealing systems operate with a high quality and reliability, a desire is felt in the sector to further improve the known sealing systems, in particular the ultrasonic sealing systems. In particular, a desire is felt to improve the quality of the transversal seal and/or to operate the packaging machine at a higher speed (capacity).

### Summary of the invention

The herein disclosed technology seeks to at least partly mitigate, alleviate or eliminate one or more of the above-mentioned deficiencies and disadvantages of the prior art. In particular, various embodiments of the present disclosure provide solutions for improving the quality of the seal of packages (in particular, the transversal seal) and/or for operating the packaging machines at a higher speed, specifically by shortening the cooling time of the seal by accelerating the heat dissipation from the (transversal) seal portion of the packaging material during the forming and sealing manufacturing step.

Various aspects and embodiments of the disclosed invention are defined in the accompanying independent and dependent claims, which define the scope of protection and form an integral part of the technical teaching of the description provided herein.

According to a first aspect, there is provided an anvil for a sealing system for sealing a packaging material, according to independent claim 1. Preferred embodiments of the anvil are claimed in the claims being directly or indirectly dependent on claim 1.

According to a second aspect, there is also provided a sealing system for sealing a packaging material, according to claim 10. Preferred embodiments of the sealing system are claimed in the claims being directly or indirectly dependent on claim 10.

According to a third aspect, there is also provided a packaging machine according to claim 13. Preferred embodiments of the packaging machine are claimed in the claims being directly or indirectly dependent on claim 13.

According to a fourth aspect, there is also provided a method of producing sealed packages according to claim 16.

### Brief description of the drawings

Embodiments of the present invention will be described by way of non-limiting examples with reference to the accompanying drawings, in which:
- Figure 1 shows a perspective schematic view of a packaging machine configured to produce sealed packages from a web of packaging material, with parts removed for clarity;
- Figure 2 shows a perspective schematic view of a detail of the packaging machine of Figure 1, in particular showing portions of a transversal sealing system of the packaging machine, with parts removed for clarity;
- Figure 3 shows a lateral (side) schematic view of a detail of the packaging machine of Figure 1, in particular showing portions of a package forming apparatus that includes two transversal sealing systems, with parts removed for clarity;
- Figure 4 shows a perspective schematic view of a package containing a pourable food product after a transversal sealing and cutting step, and before a folding step;
- Figure 5 shows a lateral (side) schematic view of a main sealing band between two consecutive packages during the transversal sealing step, in a case where the packaging material includes an aluminum-based core layer;
- Figure 6 shows a lateral (side) schematic view of a main sealing band between two consecutive packages during the transversal sealing step, in a case where the packaging material is aluminum-free;
- Figures 7 to 12 show a series of successive lateral cross section views, taken at different positions moving along the transversal direction, of a counter-sealing element of a sealing system according to one or more embodiments;
- Figure 13 shows a cross section view, taken orthogonally to the longitudinal direction, of a counter-sealing element of a sealing system according to one or more embodiments;
- Figure 14 shows a lateral (side) cross section view of a portion of an anvil for a sealing system according to one or more embodiments, in particular the portion that, is use, faces the packaging material and applies pressure to form, in cooperation with the sonotrode, the main sealing band; and
- Figure 15 shows a front schematic view of a package forming apparatus for a packaging machine according to one or more embodiments, comprising two forming and sealing assemblies.

### Detailed description

In the ensuing description numerous specific details are provided in order to enable an in-depth understanding of the embodiments. The embodiments may be implemented without one or various specific details, or with other methods, components, materials, etc. In other cases, well-known operations, materials, or structures are not represented or described in detail so that the aspects of the embodiments will not be obscured.

Reference throughout the ensuing description to "an embodiment" or "one embodiment" means that a particular characteristic, distinctive element, or structure described with reference to the embodiment is comprised in at least one embodiment. Thus, use of phrases such as "in an embodiment" or "in one embodiment" in various points of this description do not necessarily refer to one and the same embodiment. Moreover, the details, characteristics, distinctive elements, or structures may be combined in any way in one or more embodiments.

The references used herein are provided merely for convenience and do not define the scope or meaning of the embodiments.

As illustrated in the Figures, the sizes of layers and regions may be exaggerated for illustrative purposes and, thus, are provided to illustrate the general structures of variants of the present inventive concept. Like reference numerals refer to like elements throughout.

As anticipated, an objective of the present invention is that of improving the quality of the seal (in particular, the transversal seal) and/or allowing operation of the packaging machine at a higher speed, by reducing the cooling time of the (transversal) seal, in particular in cases where the packaging material does not include an aluminum foil that facilitates heat dissipation during the sealing step. In fact, although rare, delamination is one of the possible failures that can happen in the transversal sealing process. Tests and simulations show that a cause of delamination is an insufficient cooling time (understood as the time interval between the end of the ultrasonic pulse and the opening of the sealing system 20), which results in the pourable product loading the transversal seal before the heat-seal material solidifies. If the pressure exerted by the weight of the pourable product on the transversal seal is higher than the adhesion strength between the two layers of heat-sealable material, delamination occurs.

It will be noted that, while in the present description reference is made mainly to the transversal seal of a tube of packaging material in continuous-filling machines, one or more embodiments may be applied also in packaging machines for the sealing of ready-to-fill packages (i.e., open packages that are already shaped when filled, and later sealed at the top), which do not come from a tube.

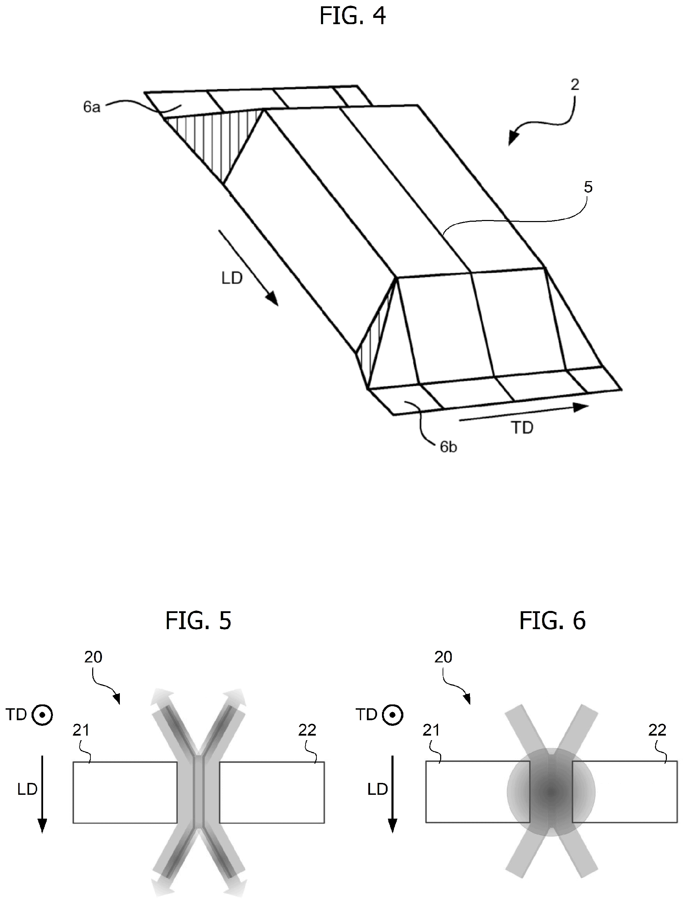

Delamination is more frequent when an aluminum-free packaging material is used: absence of the aluminum foil results in a lower capability of dissipating the heat (in the longitudinal plane of the seal portion of the packages, i.e., along the longitudinal direction LD), since polymers and paper fibers have a lower thermal conductivity than aluminum. This can be understood by referring to Figures 5 and 6, which show two side views of a schematized sealing system 20 during the transversal sealing step. In the case of Figure 5, the packaging material includes an aluminum layer that facilitates heat dissipation in the longitudinal direction (towards both the upper package and the lower package). In the case of Figure 6, the packaging material is aluminum-free and thus heat is dissipated more slowly from the transversal seal portion, resulting in a so-called "oven effect" in the seal area between the sonotrode 21 and the anvil 22. Considering that the target sealing temperature (i.e., the melting point of the heat-seal material) is the same independently of whether the packaging material includes aluminum or not, aluminum-free packaging material generally requires a longer cooling time.

For similar reasons, an increased operating speed (or capacity) of the packaging machine might in rare cases be the cause of delamination, insofar as the cooling time is reduced to accommodate for a shorter overall cycle time.

Therefore, one or more embodiments of the present description aim at improving (e.g., accelerating) the dissipation of heat from the (transversal) seal area of the packages during the (transversal) sealing step, in order to reduce the cooling time and thus improve the seal quality and/or run the packaging machine at a higher speed (capacity).

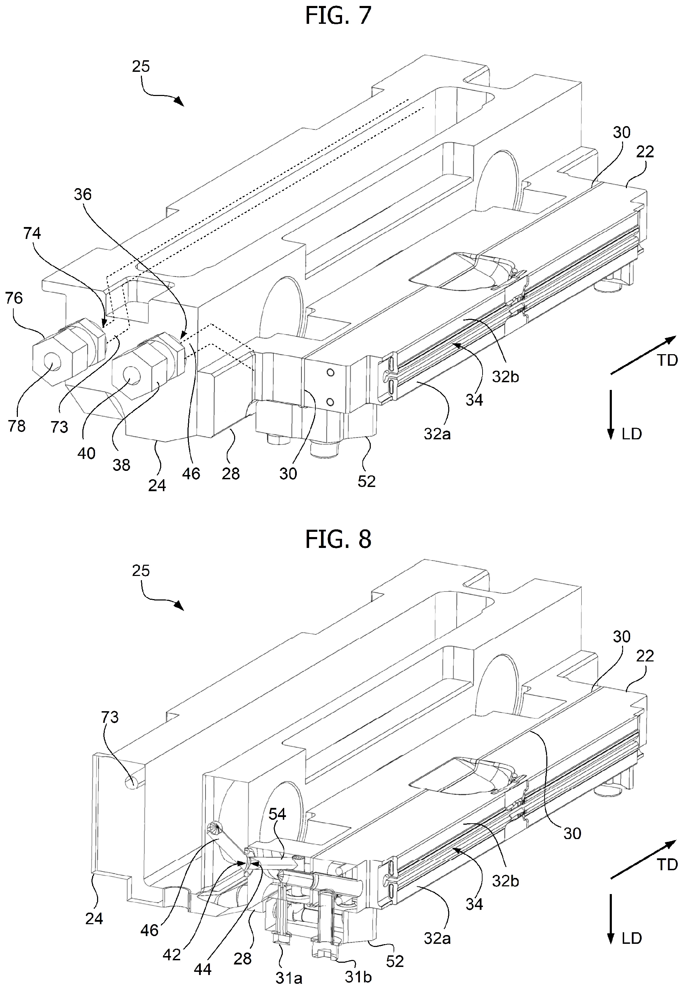

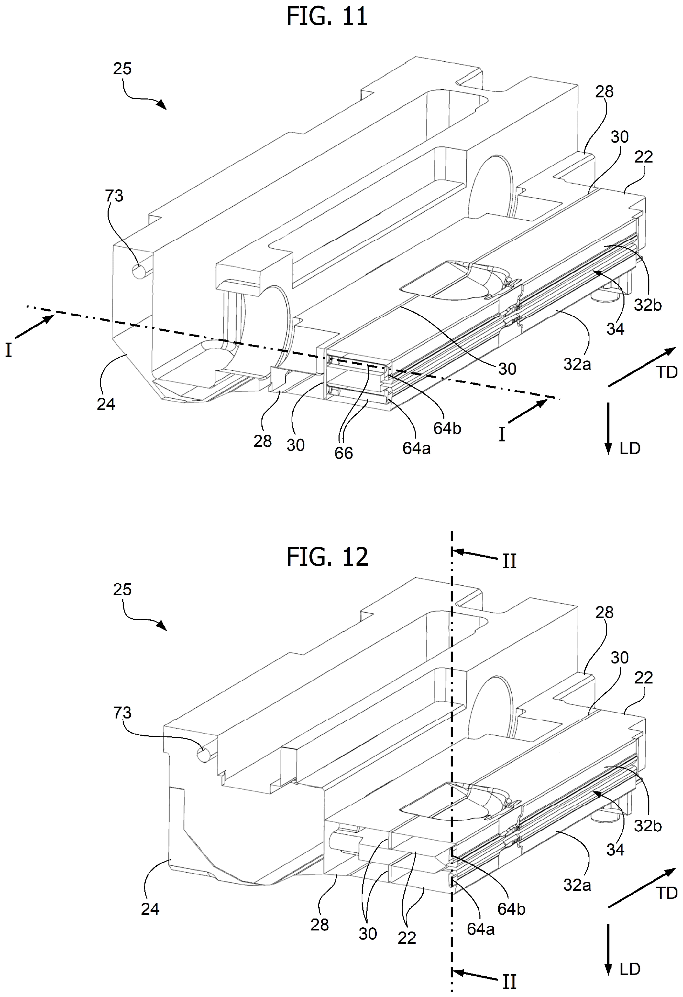

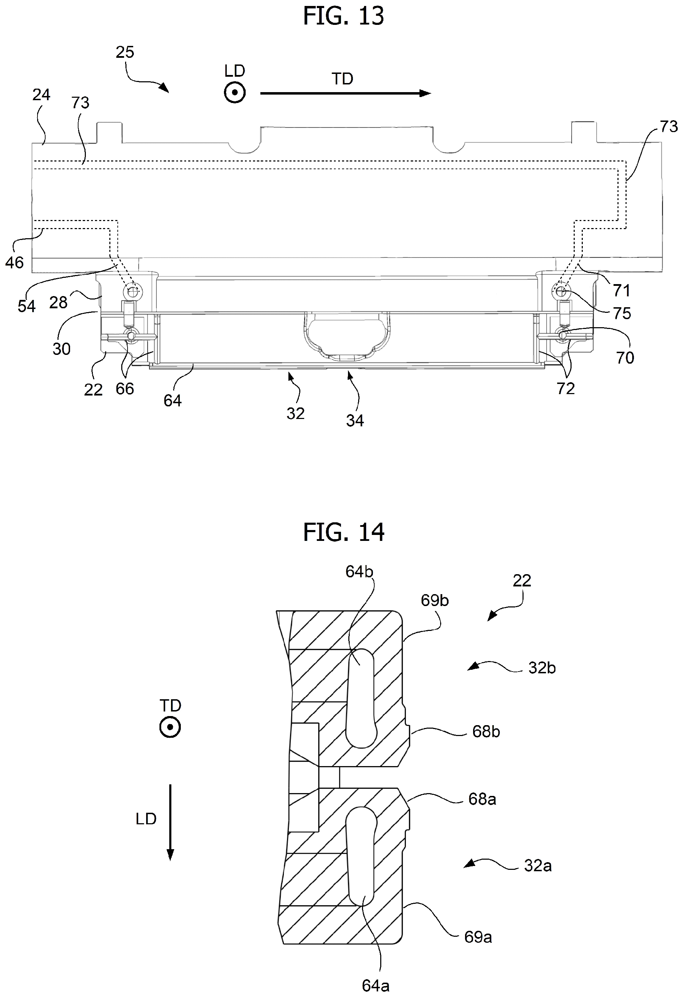

In order to do so, one or more embodiments relate to a (rigid or non-deformable) anvil 22 for a (transversal) sealing system 20 of a packaging machine 1 that is configured to be actively cooled, in use, by a coolant (or cooling fluid) that flows through one or more dedicated cooling channels or cooling ducts of the anvil, preferably close to the surface of the anvil that, in use, comes into contact with the packaging material. In this regard, Figures 7 to 12 show various lateral cross sections taken from a perspective view of a counter-sealing element 25 according to one or more embodiments, including an anvil 22 and a support structure provided with fluid-tight ducts for cooling as described in detail in the following. It will be noted that Figures 7 through 12 represent successive cross sections taken moving along the transversal direction TD from the "left end side" to the "right end side" that can be defined by looking at the counter-sealing element 25 from the perspective of the sonotrode 21. Figure 13 shows instead a cross section of the counter-sealing element 25 taken along a plane perpendicular to the longitudinal direction LD (e.g., a horizontal plane), as indicated by line I-I in Figure 11.

Substantially, the counter-sealing element 25 may include a support 24 (e.g., made of steel) extending mainly in the transversal direction TD (e.g., horizontally), which is configured to carry the anvil 22 and which, in use, moves in the longitudinal direction LD (e.g., vertically) at the same pace as tube 4 during the sealing step. A spacer element 28 (e.g., made of steel), which also extends mainly in the transversal direction TD, is fixed (e.g., screwed) to the support 24 and carried thereby. The anvil 22, which also extends mainly in the transversal direction TD, is fixed (e.g., screwed) to the spacer element 28 and carried thereby. A damper 30 (e.g., made of plastic, preferably polyether ether ketone, PEEK) is arranged (e.g., interposed) between the spacer element 28 and the anvil 22, in order to damp the vibrations that the anvil 22 receives, in use, from the sonotrode 21 and would otherwise propagate to the rest of the machine (i.e., to the support 24). The anvil 22 has an anvil surface substantially coplanar with the plane defined by the longitudinal direction LD and the transversal direction TD (also referred to as "LD-TD plane" herein) which, in use, faces a corresponding (sealing) surface of the sonotrode 21 and, during the sealing step, is pressed against the corresponding surface of the sonotrode to clamp the tube 4 of packaging material therebetween. Preferably, the anvil 22 has a first anvil surface 32a, extending continuously along the transversal direction TD, and a second anvil surface 32b, also extending continuously along the transversal direction TD, separated by a slit 34 along the longitudinal direction LD. In use, the first surface 32a co-operates with a corresponding portion of the surface of the sonotrode 21 to form the transversal top sealing band 6a of a leading package 2a, the second surface 32b co-operates with a corresponding portion of the surface of the sonotrode 21 to form the transversal bottom sealing band 6b of the successive package 2b, and the slit 34 allows the passage of the cutting device 26 to cut between the sealing bands 6a and 6b. Other elements of the transversal sealing system 20 (e.g., the sonotrode 21) are not visible in Figures 7 to 13 for ease of illustration only, insofar as they may be realized according to the known solutions.

In order to provide a flow pathway for the cooling fluid from the service unit of the packaging machine 1 to the anvil 22, the support 24 and the spacer 28 are provided with respective fluid-tight ducts that, once the sealing system 20 is assembled, provide a continuous inlet duct towards the anvil 22. For the reasons described more in detail in the following, the fluid-tight connection between the spacer 28 and the anvil 22 may not be direct, but may be implemented via an additional element (e.g., a bridge connector) provided with an inner duct as well.

Similarly, in order to provide a return pathway for the cooling fluid from the anvil 22 to the service unit of the packaging machine 1, the support 24 and the spacer 28 are provided with respective fluid-tight ducts that, once the sealing system 20 is assembled, provide a continuous outlet duct from the anvil 22. For the outlet duct as well, the fluid-tight connection between the anvil 22 and the spacer 28 may not be direct, but may be implemented via another additional element (e.g., a second bridge connector) provided with an inner duct.

As exemplified in Figures 7 and 8, the portion 46 of the inlet duct passing through the support 24 may fluidically connect a first opening 36 of the support 24 to a second opening 42 of the support 24. In particular, the opening 36 may be arranged at a lateral surface of the support 24 that is orthogonal to the transversal direction TD (e.g., a left surface), and the opening 42 may be arranged at a front surface of the support 24 that is coplanar with the LD-TD plane and in contact with the spacer 28. The opening 36 may be configured for coupling (e.g., via a fluid-tight connector 38) to an inlet pipe 40, and the opening 42 may be configured to be arranged face to face with an opening 44 of the spacer 26 (to be coupled thereto, e.g., via a fluid-tight seal, gasket or O-ring). The fluid-tight duct 46 that fluidically connects the opening 36 to the opening 42 within the support 24 may have any shape suitable for that purpose. For instance, a first portion of the duct 46 may extend from the opening 36 through the support 24 substantially along (e.g., parallel to) the transversal direction TD, and a second portion of the duct 46 may extend through the support 24 from the first portion to the opening 44, in a direction incident with the LD-TD plane so as to approach the front surface of the support 24. For instance, the second portion may be orthogonal to the LD-TD plane, but in the example shown herein, the second portion extends diagonally also along both the longitudinal direction LD and the transversal direction TD.

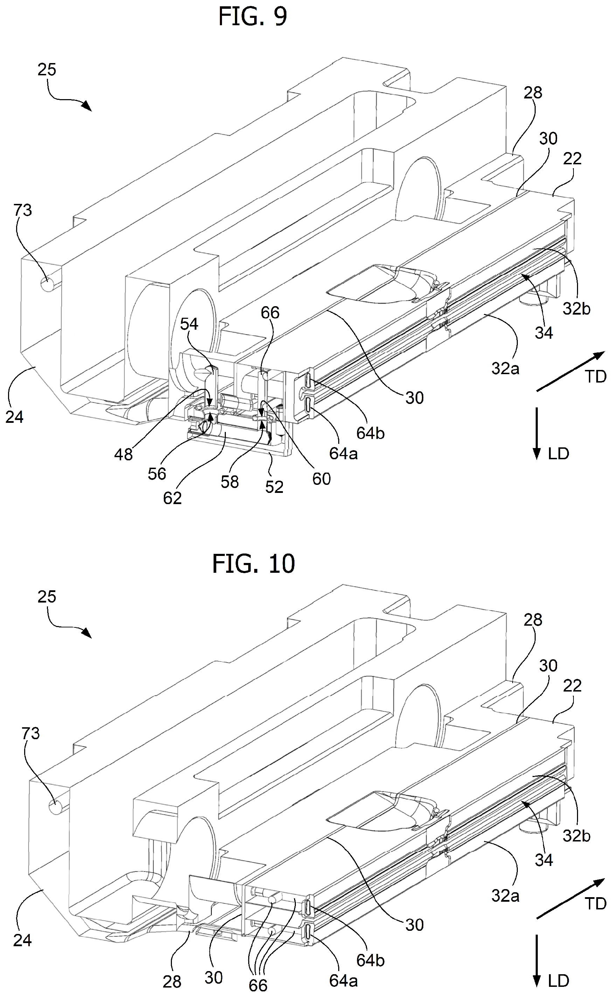

As exemplified in Figures 8 and 9, the portion 54 of the inlet duct passing through the spacer element 28 may fluidically connect a first opening 44 of the spacer 28 to a second opening 48 of the spacer 28. In particular, the opening 44 may be arranged at a rear surface of the spacer 28 that is coplanar with the LD-TD plane and in contact with the support 24, and the opening 48 may be arranged at a bottom surface of the spacer 28 that is orthogonal to the longitudinal direction LD and in contact with the bridge connector 52. The opening 44 may be configured for coupling (e.g., via a fluid-tight seal, gasket or O-ring) to the opening 42 of the support 24, and the opening 48 may be configured to be arranged face to face with an opening 50 of a bridge connector 52 (to be coupled thereto, e.g., via a fluid-tight seal, gasket or O-ring). The fluid-tight duct 54 that fluidically connects the opening 44 to the opening 48 within the spacer 28 may have any shape suitable for that purpose. For instance, a first portion of the duct 54 may extend from the opening 44 through the spacer 28 in a direction incident with the LD-TD plane so as to get further away from the rear surface of the spacer 28, and a second portion of the duct 54 may extend substantially along (e.g., parallel to) the longitudinal direction LD from the first portion to the opening 48. For instance, the first portion may be orthogonal to the LD-TD plane, but in the example shown herein, the first portion extends diagonally also along both the longitudinal direction LD and the transversal direction TD. Similarly, the second portion may not necessarily extend parallel to the longitudinal direction LD, but may extend at an angle with respect to the longitudinal direction LD, as long as it reaches an opening 48 in the bottom surface of the spacer 28.

As exemplified in Figure 9, the portion 62 of the inlet duct passing through the bridge connector 52 may fluidically connect a first opening 56 of the bridge connector 52 to a second opening 58 of the bridge connector 52. In particular, both the openings 56 and 58 may be arranged at a top surface of the bridge connector 52 that is orthogonal to the longitudinal direction LD, and is in contact with the spacer 28 in the region of the opening 56, and in contact with the anvil 22 in the region of the opening 58. The opening 56 may be configured for coupling (e.g., via a fluid-tight seal, gasket or O-ring) to the opening 48 of the spacer 28, and the opening 58 may be configured to be arranged face to face with an opening 60 of the anvil 22 (to be coupled thereto, e.g., via a fluid-tight seal, gasket or O-ring). The fluid-tight duct 62 that fluidically connects the opening 56 to the opening 58 within the bridge connector 52 may have any shape suitable for that purpose (e.g., any U-like shape). For instance, a first portion of the duct 62 may extend from the opening 56 in the longitudinal direction LD, a second portion of the duct 62 may extend in a direction that is substantially orthogonal to the LD-TD plane, and a third portion of the duct 62 may extend from the second portion to the opening 58 in the longitudinal direction LD.

Each bridge connector may be fixed to the spacer element 28 and to the anvil 22 (e.g., via a pair of screws 31a and 31b, as exemplified in Figure 8).

As exemplified in Figures 9 to 14, the anvil 22 has at least one cooling duct extending along the transversal direction TD, between the "left end" side and the "right end" side of the anvil, within the body of the anvil and underneath the surface 32 (e.g., integrated within the body) that, in use, is in contact with the transversal sealing bands of the packages 2 during the sealing process. In particular, in the example shown herein, the anvil 22 has a first anvil surface 32a and a second anvil surface 32b separated by a slit 34, and includes a first fluid-tight cooling duct 64a extending underneath the first anvil surface 32a and a second fluid-tight cooling duct 64b extending underneath the second anvil surface 32b. At their left end sides, which are visible in the Figures annexed herein, the cooling ducts 64a and 64b are fluidically connected to the inlet opening 60 of the anvil 22 via a fluid-tight duct 66, to receive the cooling fluid from the continuous inlet duct 46, 54, 62. At their right end sides, which are not visible in Figures 7 to 12 but are visible in Figure 13, the cooling ducts 64a and 64b are fluidically connected to an outlet opening 70 of the anvil 22 via a fluid-tight duct 72, to evacuate the cooling fluid towards a continuous outlet duct.

As anticipated, the continuous outlet duct is provided by a second bridge connector and then within the spacer 28 and the support 24, in a manner similar to that described for the continuous inlet duct. The second bridge connector may be similar or identical to the first bridge connector 52. The portion of the outlet duct passing through the spacer 28 may be symmetrical to the portion 54 of the inlet duct passing through the spacer 28 with respect to the longitudinal direction LD (e.g., having an opening 75 corresponding to opening 48, and a duct 71 corresponding to duct 54, see Figure 13). Conversely, the portion of the outlet duct passing through the support 24 may or may not be symmetrical to the portion 46 of the inlet duct passing through the support 24 with respect to the longitudinal direction LD. In case the outlet duct within the support 24 is symmetrical to the inlet duct, the outlet opening of the support 24 would be located on the opposite side (e.g., right end side) of the support 24 with respect to the inlet opening 36. This solution, while generally feasible, would be impractical in case the package forming apparatus 12 includes more than one forming and sealing assemblies. It is thus preferable that the outlet opening 74 of the support 24, which is configured for coupling (e.g., via a fluid-tight connector 76) to an outlet pipe 78 (see again Figure 7), is located on the same lateral surface of the support 24 (orthogonal to the transversal direction TD) where the inlet opening 36 is, as exemplified in Figure 7. In this case, the portion 73 of the outlet duct passing through the support 24 is not symmetrical to the portion 46 of the inlet duct passing through the support 24.

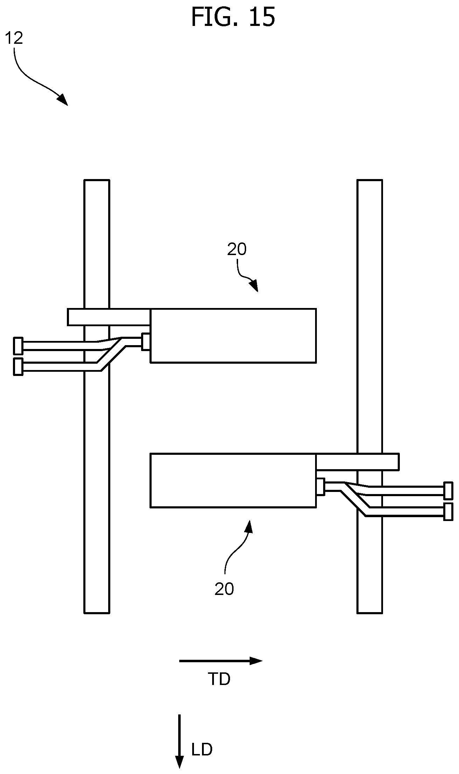

Also, it will be understood that the openings 36 and 74 could be located, in one or more embodiments, on the right end side of the support 24, and the ducts 46 and 73 in the support 24 could be designed accordingly (i.e., symmetrically with respect to what has been described with reference to Figures 7-13). By doing so, a packaging machine according to embodiments of the present description may include two forming and sealing assemblies 19, each including a respective sealing system 20 including a counter-sealing element 25. The first counter-sealing element has the openings 36, 74 arranged on the left side of the support 24, and the second counter-sealing element has the openings 36, 74 arranged on the right side of the support 24, so that the two forming and sealing assemblies 19 can be slidably mounted on respective longitudinal guiding elements arranged at the left and right sides, respectively, of the package forming apparatus 12, as exemplified in Figure 15 and in a manner known per se.

It will also be noted that the flow direction of the cooling fluid can be reversed, so that the inlet duct and the outlet duct of the counter-sealing element 25 can be swapped.

Turning now to a detailed description of possible embodiments of the anvil 22, the inlet opening 60 and the outlet opening 70 of the anvil 22 may be arranged at a surface of the anvil that is orthogonal to the longitudinal direction LD and is in contact with the respective bridge connectors (e.g., a bottom surface). The inlet opening 60 may be configured for coupling (e.g., via a fluid-tight seal, gasket or O-ring) to the opening 58 of the first bridge connector 52, and the outlet opening 70 may be configured for coupling (e.g., via a fluid-tight seal, gasket or O-ring) to an opening of the second bridge connector (not visible in Figures 7 to 12). The fluid-tight ducts 66 and 72 that fluidically connect the cooling ducts 64a and 64b to the openings 60 and 70, respectively, may have any shape suitable for that purpose. For instance, the ducts 66 and 72 may each have:
- a first duct portion extending in the longitudinal direction LD (respectively from the inlet opening 60 and from the outlet opening 70 at the bottom surface of the anvil 22) towards the top surface of the anvil 22 (see in particular Figure 9);
- second duct portions extending along the transversal direction TD from the first duct portion towards the center portion of the anvil 22, and stemming from the first duct portions at different heights corresponding to the heights of the anvil surfaces 32a and 32b (see in particular Figure 10); and
- third duct portions extending orthogonally to the LD-TD plane, each one from a respective one of the second duct portions and towards a respective one of the front surfaces 32a and 32b of the anvil 22, and thus towards a respective one of the cooling ducts 64a and 64b (see in particular Figure 11).

Preferably, the fluid-tight duct 72 may be symmetrical to the fluid-tight duct 66 with respect to the longitudinal direction LD. Preferably, the cooling ducts 64a and 64b may be both symmetrical with respect to a middle axis of the anvil 22 parallel to the longitudinal direction LD. Preferably, the first anvil surface 32a and the second anvil surface 32b, as well as the first cooling duct 64a and the second cooling duct 64b, may be symmetrical with respect to a plane orthogonal to the longitudinal direction LD and passing through the slit 34.

The cooling ducts 64a and 64b may be shaped so as to provide good heat dissipation from the surfaces 32a and 32b of the anvil 22, while still providing the structural strength necessary for the anvil 22 to be pressed against the sonotrode 21 during the sealing process and withstand the resulting vibrations. In this regard, reference may be made to Figure 14, which shows a lateral cross section of a portion of the anvil 22 that, in use, faces the sonotrode 21, taken along a plane perpendicular to the transversal direction TD, as indicated by line II-II in Figure 12.

As exemplified in Figure 14, the cooling ducts 64a, 64b may have a cross section that is preferably elongated in the longitudinal direction LD. The choice of an elongated cross section is particularly advantageous insofar as it can make the flow of the cooling fluid more turbulent (e.g., compared to a circular cross section), thereby improving the cooling power. Additionally, an elongated cross section may provide a cooling effect that is as uniform as possible along the entire extension of the anvil surfaces 32a, 32b in the longitudinal direction LD (e.g., height).

As exemplified in Figure 14, each anvil surface 32a, 32b may have a respective raised contact portion 68a, 68b extending along the transversal direction TD and protruding orthogonally to the sealing plane LD-TD (e.g., in use, towards the sonotrode), and a respective recessed portion 69a, 69b also extending along the transversal direction TD. Each raised contact portion 68a, 68b may have one or more ridges or protrusions. In use, the contact portions 68a, 68b may actually come into contact with the packaging material, while the recessed portions 69a, 69b may not come into contact with the packaging material and may just provide the suitable structural stiffness to the anvil 22. Therefore, the transversal seal takes place in the region of the raised contact portions 68a, 68b, and most of the heat has to be dissipated therefrom. Therefore, in one or more embodiments the cooling ducts 64a, 64b extend at least underneath the raised contact portions 68a, 68b of the anvil surfaces 32a, 32b, thereby improving heat dissipation.

As exemplified in Figure 14, the cooling ducts 64a, 64b may extend also underneath the recessed portions 69a, 69b of the anvil surfaces 32a, 32b. In this case, it is preferable that the cross section of the cooling ducts is larger in the region underneath the raised contact portions 68a, 68b than it is in the region underneath the recessed portions 69a, 69b, thereby improving heat dissipation. For instance, the width of the cooling ducts 64a, 64b (considered in the direction orthogonal to the LD-TD plane) may be maximum in the region underneath the raised contact portions 68a, 68b and decrease moving away from in (or, in other words, the cooling ducts 64a, 64b may have a tapered cross section).

As exemplified in Figure 14, the cooling ducts 64a, 64b may have a continuous curvilinear cross section without sharp edges, so as to improve the mechanical strength of the anvil 22 against vibrations and reduce the risk of cracks.

As exemplified in Figure 14, the cooling ducts 64a, 64b may be shaped so that the thickness of the wall of the anvil 22 between a surface 32 and the inner surface of the corresponding cooling duct 64 that faces the external surface 32, measured orthogonally to the LD-TD plane, is maintained as constant as possible over the entire longitudinal extension of the surface 32. For example, where the surfaces 32a, 32b have respective ridges or protrusions, the width of the cooling ducts 64a, 64b may be increased.

Just by way of non-limiting example, the cross section of the cooling ducts 64a, 64b may have one or more of the following dimensions:
- area in the range of 5 mm² to 7 mm², preferably equal to 6 mm²;
- a first circular end, beneath the raised contact portions 68a, 68b of the surfaces 32a, 32b (e.g., facing towards the slit 34), having a radius in the range of 0.65 mm to 0.85 mm, preferably equal to 0.75 mm;
- a second circular end, beneath the recessed portions 69a, 69b of the surfaces 32a, 32b (e.g., facing away from the slit 34), having a radius shorter than the radius of the first circular end, in particular in the range of 0.5 mm to 0.7 mm, preferably equal to 0.6 mm; and
- a middle portion, connecting the first circular end and the second circular end, extending in the longitudinal direction LD for a length greater than the sum of the radii of the first and second circular ends, in particular said length being in the range of 3.3 mm to 3.5 mm, preferably equal to 3.4 mm (measured between the centers of the first and second ends).

Just by way of non-limiting example, the thickness of the wall of the anvil 22 in the region between a surface 32 and the inner wall of the respective cooling duct 64 may be in the range of 1.2 mm to 1.8 mm, preferably equal to 1.5 mm. Still by way of non-limiting example, the thickness of the wall of the anvil 22 in the region between the slit 34 and the inner wall of the cooling ducts 64 may be in the range of 0.8 mm to 1.0 mm, preferably equal to 0.9 mm.

In one or more embodiments, the cooling ducts 64a, 64b may be obtained via electrical discharge machining (EDM) of the anvil 22.

It will be understood that, while the counter-sealing element 25 described herein by way of example includes a support 24 and a spacer 26 fixed one to another, in variant embodiments a single (metal) piece may perform the same structural functions, and thus the fluid-tight ducts 46 and 54 may be implemented substantially as a single, continuous duct extending through such a single piece.

It will also be understood that in the example described herein the bridge connector 52 (as well as the second bridge connector) has openings 56 and 58 located on the same (e.g., upper) face, and a generally U-shaped duct 62 connecting them, since the spacer 28 and the anvil 22 have the same height, measured in the longitudinal direction LD. However, in variant embodiments, the spacer 28 could extend more in the longitudinal direction LD, protruding with respect to the bottom surface of the anvil 22. In that case, the second portion of the duct 54 internal to the spacer 28 could be L-shaped, with a terminal portion extending in the direction orthogonal to the LD-TD plane and the opening 48 being coplanar with the LD-TD plane. The bridge connector 52 could thus also have an internal L-shaped duct 62, with opening 56 coplanar with the LD-TD plane and opening 60 in the same position as exemplified in Figure 9.

The purpose of the external bridge connector 52 is substantially that of avoiding a direct fluid connection between the anvil 22 and the spacer 28 via respective ducts that extend in a direction orthogonal to the LD-TD plane, with the interposition of a seal, gasket or O-ring coplanar with the LD-TD plane. In fact, such an arrangement could reduce the effectiveness of the damper 30, or may suffer from excessive mechanical stress due to the vibrations generated by the sonotrode in the direction orthogonal to the LD-TD plane. Therefore, independently from the shape of the ducts in the support 24, in the spacer 28 and in the bridge connectors 52, it is preferable that the openings 60 and 70 of the anvil 22 are located on a surface of the anvil 22 that is orthogonal to the LD-TD plane, such as the bottom surface as exemplified herein.

It will also be understood that, while in the example described herein the fluidic connection between the anvil 22 and the spacer 28 has been implemented on the bottom side thereof, in variant embodiments the same or a similar effect may be obtained by implementing the fluidic connections on the top side of the anvil 22 and the spacer 28 (e.g., by turning upside-down the bridge connectors and mounting them on top of the anvil 22 and spacer 28).

Therefore, substantially, one or more embodiments relate to a packaging machine where the counter-sealing element(s) used in the transversal sealing apparatus, and in particular the anvil(s) 22, are cooled by a cooling fluid that, in use, flows through one or more cooling ducts 64a, 64b that run underneath the surface 32 of the anvil that, in use, is in contact with the packaging material.

In one or more embodiments, the cooling fluid may be, for instance, water or an ethylene glycol-based coolant.

In one or more embodiments, the cooling action may be continuous during operation of the packaging machine (that is, the cooling fluid may be pumped at a constant flow rate through the anvil 22), even though the heating action of the sonotrode is pulsed (that is, the sonotrode is activated to generate ultrasonic vibrations only when in contact with the packaging material).

In one or more embodiments, the packaging machine may include means for sensing the temperature of the anvil 22 and/or for sensing the temperature of the cooling fluid, and/or means for sensing the flow of cooling fluid through the cooling ducts of the anvil. For instance, a temperature sensor such as a thermocouple may be arranged on the anvil. For instance, a temperature sensor such as a thermocouple may be arranged at the inlet opening 36 (e.g., within connector 38 or pipe 40) so as to sense the temperature of the inlet cooling fluid, and/or a temperature sensor such as a thermocouple may be arranged at the outlet opening 74 (e.g., within connector 76 or pipe 78) so as to sense the temperature of the outlet cooling fluid. For instance, a flowmeter may be arranged at the inlet opening 36 (e.g., within connector 38 or pipe 40) so as to measure the flow of the inlet cooling fluid, and/or a flowmeter may be arranged at the outlet opening 74 (e.g., within connector 76 or pipe 78) so as to sense the flow of the outlet cooling fluid.

Additionally or alternatively to the sensing means described above, in one or more embodiments the anvil may not be provided with any dedicated temperature sensor, and the temperature of the anvil may be determined indirectly by sensing the temperature of the cooling fluid pumped by the service unit of the packaging machine 1. For instance, the temperature of the cooling fluid may be measured at the outlet of the service unit (i.e., at the inlet flow pipe of the anvil) and/or at the inlet of the service unit (i.e., at the return pipe from the anvil). In use, the temperature of the cooling fluid may be kept in the range of about 10°C to about 15°C, particularly in the range of about 13°C to about 15°C. In use, the difference between the temperature of the cooling fluid entering the anvil and the temperature of the cooling fluid exiting the anvil may be about 1.5°C.

In one or more embodiments, the packaging machine may be configured to adjust operation, e.g., slow down or stop operation, if the sensed temperature of the anvil and/or the sensed temperature of the cooling fluid exceeds a threshold.

In one or more embodiments, the cooling power of the anvil 22 may be controlled by controlling the temperature of the cooling fluid pumped by the service unit. By lowering the temperature of the cooling fluid, dissipation of heat from the anvil is increased and a lower temperature of the anvil can be reached. Additionally or alternatively, in one or more embodiments the cooling power of the anvil 22 may be controlled by controlling the flow of the cooling fluid pumped by the service unit. By increasing the flow of the cooling fluid, dissipation of heat from the anvil is increased and a lower temperature of the anvil can be reached.

The cooling time of the anvil 22 may be further reduced by making the anvil 22 out of a material that has a higher thermal conductivity than stainless steel (which is the material typically used for the anvils of the known packaging machines, due to its high mechanical resistance against the sonotrode stress and high chemical resistance against corrosive environment). By increasing the thermal conductivity of the anvil, heat dissipation away from the surface 32 of the anvil (in the direction perpendicular to the LD-TD plane) can be improved. Therefore, in one or more embodiments, the anvil 22 may comprise or may be made of a material that has a mechanical and chemical resistance comparable to (stainless) steel but a higher thermal conductivity than (stainless) steel. Other desirable characteristics of the material for the anvil are: good resistance to temperature, good resistance to oxidation and corrosion, low cost, and good machinability. For instance, the anvil 22 may comprise or be made of at least one of the following materials, or a mixture or alloy thereof:
- an aluminum alloy, in particular an aluminum-magnesium-silicon (AlMgSi) alloy known as AW 6060 T6 (Vickers hardness in the range 86-95 HV);
- a copper alloy, in particular a copper-beryllium alloy known as Moldmax^{®} HH (Rockwell C hardness of about 40 HRC, or equivalently Vickers hardness of about 390 HV); and
- a copper alloy, in particular a copper-zirconium alloy known as CW120C (Vickers hardness of about 145-155 HV).

By resorting to active cooling of the anvil, possibly in conjunction with the use of anvil materials having a high thermal conductivity, the temperature of the anvil during the sealing process can be greatly reduced compared to the known solutions, and so the cooling rate can be improved. For instance, the temperature of a cooled anvil may be in the range of about 15°C to about 30°C or even lower, compared to a range of about 40°C to about 50°C for non-cooled (conventional) anvils. As a result, a reduction of the sealing time of about 50 ms may be obtained, without negatively affecting the quality of the transversal seal.

It will be noted that the instant invention has been described mainly as providing improvements in the field of ultrasonic transversal sealing of aluminum-free packaging materials. However, it is again recalled that one or more embodiments of the instant invention generally provide an improvement of the quality and/or reduction of the cooling time of the transversal seal, and thus are advantageously applicable with aluminum-based packaging materials as well, where the transversal seal may be obtained via a different process (e.g., high-frequency induction heating, where the sealing system includes a second anvil in the place of the sonotrode, and a high-frequency electromagnetic wave generator).

One or more embodiments may thus provide one or more of the following advantages:
- better quality of the transversal seal, insofar as the temperature of the anvil is controlled (e.g., reduced compared to the known solutions) and the cooling speed of the anvil is increased;
- increased capacity of the packaging machine, insofar as a shorter cooling time allows for an overall shorter duration of the sealing cycle.

According to the present disclosure, the anvil is depicted having an elongated cross section, however the cross section may have different shapes, such as circular.

The anvil 22 for a sealing system 20 is made of a non-deformable material.

According to the present disclosure and the drawings, the anvil 22 has the at least one anvil surface 32a, 32b configured to contact, in use, the packaging material, and at least a further anvil surface, opposite to the at least anvil surface 32a, 32b. The cooling duct 64a, 64b may be positioned closer to the at least one anvil surface 32a, 32b with respect to the at least one further anvil surface. Each surface of the cooling duct 64a, 64b may be closer to the at least one anvil surface 32a, 32b than any other surface of the anvil 22.

Of course, without prejudice to the principles underlying the invention, the details of implementation and the embodiments may vary widely with respect to what has been described and illustrated herein purely to way of example, without thereby departing from the scope of the present invention, as defined by the annexed claims.

## Claims

1. An anvil (22) for a sealing system (20) of a packaging machine (1), the sealing system (20) being configured to seal a packaging material, the anvil (22) comprising:
- at least one anvil surface (32a, 32b) extending in a sealing plane defined by a transversal direction (TD) and a longitudinal direction (LD), the at least one anvil surface (32a, 32b) extending predominantly along the transversal direction (TD); and
- at least one cooling duct (64a, 64b) extending within a body of the anvil (22) along the transversal direction (TD) underneath said at least one anvil surface (32a, 32b).

2. An anvil (22) according to the previous claim, wherein the at least one cooling duct (64a, 64b) has a cross section, perpendicular to said transversal direction (TD), elongated in the longitudinal direction (LD).

3. An anvil (22) according the claim 1 or claim 2, wherein said at least one anvil surface (32a, 32b) comprises a raised contact portion (68a, 68b) extending along the transversal direction (TD) and a recessed portion (69a, 69b) extending along the transversal direction (TD); and wherein said at least one cooling duct (64a, 64b) extends underneath at least the raised contact portion (68a, 68b) of the at least one anvil surface (32a, 32b), and
wherein a thickness of a wall of the anvil (22) between said at least one anvil surface (32a, 32b) and an inner surface of said at least one cooling duct (64a, 64b) facing towards the anvil surface (32a, 32b) is constant.

4. An anvil (22) according the previous claim, wherein said at least one cooling duct (64a, 64b) extends also underneath the recessed portion (69a, 69b) of the at least one anvil surface (32a, 32b), and wherein said cross section of the at least one cooling duct (64a, 64b) is larger in the region underneath the raised contact portion (68a, 68b) than it is in the region underneath the recessed portion (69a, 69b).

5. An anvil (22) according to any of the previous claims, wherein said cross section of the at least one cooling duct (64a, 64b) is continuously curvilinear.

6. An anvil (22) according to any of the previous claims, comprising an inlet opening (60) fluidically connected (66) to a first end of said at least one cooling duct (64a, 64b) and an outlet opening (70) fluidically connected (72) to a second end of said at least one cooling duct (64a, 64b), wherein the inlet opening (60) and the outlet opening (70) are arranged at a further surface of the anvil (22), the further surface being orthogonal to said longitudinal direction (LD).

7. An anvil (22) according to the previous claim, comprising an inlet duct (66) extending within the body of the anvil (22) between said inlet opening (60) and said first end of said at least one cooling duct (64a, 64b), and an outlet duct (72) extending within the body of the anvil (22) between said outlet opening (70) and said second end of said at least one cooling duct (64a, 64b); wherein preferably the inlet opening (60) and the outlet opening (70) are located at symmetrical positions with respect to a middle axis of the anvil (22) parallel to the longitudinal direction (LD), and wherein preferably the inlet duct (66) and the outlet duct (72) are symmetrical with respect to said middle axis.

8. An anvil (22) according to any of the previous claims, wherein said at least one anvil surface (32a, 32b) comprises a first anvil surface (32a) and a second anvil surface (32b) separated by a slit (34) extending along the transversal direction (TD); and wherein said at least one cooling duct (64a, 64b) comprises a first cooling duct (64a) extending underneath the first anvil surface (32a) and a second cooling duct (64b) extending underneath the second anvil surface (32b);
wherein preferably the first anvil surface (32a) and the second anvil surface (32b), as well as the first cooling duct (64a) and the second cooling duct (64b), are symmetrical with respect to said slit (34).

9. An anvil (22) according to any of the previous claims, comprising or made of at least one material having a thermal conductivity higher than stainless steel, preferably comprising or made of at least one of:
- an aluminum-magnesium-silicon alloy;
- a copper-beryllium alloy; and
- a copper-zirconium alloy.

10. A sealing system (20) for a packaging machine (1), the sealing system (20) being configured to seal a packaging material and comprising:
- a heat-generating device (21), preferably an ultrasonic generating device configured to generate ultrasonic vibrations; and
- a counter-sealing element (25) including an anvil (22) according to any of the previous claims, wherein preferably a cooling fluid is continuously fed to the at least one cooling duct (64a, 64b).

11. A sealing system (20) according to the previous claim, wherein the counter-sealing element (25) comprises;
- a support structure (24; 28) extending along the transversal direction (TD), to which the anvil (22) is fixed;
- a damper (30) interposed between the support structure (24; 28) and the anvil (22); and
- a first bridge connector (52) and a second bridge connector;
wherein the support structure (24, 28) comprises a respective inlet duct (46, 54) extending within the body of the support structure (24, 28) between a first opening (36) and a second opening (48) of the support structure (24, 28), and a respective outlet duct (71, 73) extending within the body of the support structure (24, 28) between a third opening (75) and a fourth opening (74) of the support structure (24, 28);
wherein the first bridge connector (52) comprises a respective duct extending within the body of the first bridge connector (52) between a first opening (56) and a second opening (58) of the first bridge connector (52);
wherein the second bridge connector comprises a respective duct extending within the body of the second bridge connector between a first opening and a second opening of the second bridge connector;
wherein the second opening (48) of the support structure (24, 28) is fluid-tight connected to the first opening (56) of the first bridge connector (52), the second opening (58) of the first bridge connector (52) is fluid-tight connected to the inlet opening (60) of the anvil (22), the outlet opening (70) of the anvil (22) is fluid-tight connected to the first opening of the second bridge connector, and the second opening of the second bridge connector is fluid-tight connected to the third opening (75) of the support structure (24, 28);
wherein the second opening (48) and the third opening (75) of the support structure (24, 28) are arranged at a surface of the support structure (24, 28) orthogonal to said longitudinal direction (LD), and wherein the openings of the first (52) and second bridge connectors are arranged at respective surfaces of the first (52) and second bridge connectors orthogonal to said longitudinal direction (LD).

12. A sealing system (20) according to the previous claim, wherein the first opening (36) and the fourth opening (74) of the support structure (24, 28) are arranged at one or more surfaces of the support structure (24, 28) orthogonal to said transversal direction (TD), preferably at a same lateral surface orthogonal to said transversal direction (TD).

13. A packaging machine (1) for producing sealed packages (2) containing a pourable food product, the packaging machine (1) comprising:
- a conveying device (7) for unrolling a web (3) of packaging material from a reel and feeding the web (3) to a tube forming station (8) of the packaging machine (1);
- a tube forming and sealing device (10) arranged in the tube forming station (8), the tube forming and sealing device (10) configured to fold (16) the web (3) of packaging material around the longitudinal direction (LD) to form a tube (4) of packaging material and longitudinally seal (17) the tube (4) of packaging material;
- a filling device (11) configured to fill the tube (4) of packaging material with a pourable food product; and
- a package forming apparatus (12) configured to transversally seal and transversally cut the filled tube (4) of packaging material along the transversal direction (TD) for forming said sealed packages (2);
wherein the package forming apparatus (12) comprises at least one package forming and sealing assembly (19), and wherein the at least one package forming and sealing assembly (19) comprises a respective sealing system (20) according to any of claims 10 to 12; and
- a service unit configured to pump a cooling fluid through said at least one cooling duct (64a, 64b) of the anvil (22).

14. A packaging machine (1) according to the previous claim, comprising:
at least one temperature sensor configured to sense a temperature of said cooling fluid, wherein preferably the service unit is configured to maintain the temperature of said cooling fluid in the range of about 10°C to about 15°C, and wherein preferably the packaging machine (1) is configured to adjust operation, more preferably slow down or stop operation, in response to the temperature of said cooling fluid being higher than a threshold; and/or
at least one flow sensor configured to sense a flow of said cooling fluid.

15. A packaging machine (1) according to claim 13 or the previous claim, wherein the package forming apparatus (12) comprises a first package forming and sealing assembly comprising a first transversal sealing system (20), and a second package forming and sealing assembly comprising a second transversal sealing system (20), and wherein:
the first opening (36) and the fourth opening (74) of the support structure (24, 28) of the counter-sealing element (25) of the first transversal sealing system (20) are arranged at a first side of the package forming apparatus (12), and the first opening (36) and the fourth opening (74) of the support structure (24, 28) of the counter-sealing element (25) of the second transversal sealing system (20) are arranged at a second side of the package forming apparatus (12), the second side opposite to the first side.

16. A method of producing sealed packages (2) containing a pourable food product using a packaging machine according to any of claims 13 to 15, the method comprising:
- unrolling a web (3) of packaging material from a reel and feeding the web (3) to the tube forming station (8) of the packaging machine (1) by the conveying device (7) of the packaging machine (1);
- folding (16) the web (3) of packaging material around the longitudinal direction (LD) to form a tube (4) of packaging material and longitudinally sealing (17) the tube (4) of packaging material by the tube forming and sealing device (10) arranged in the tube forming station (8) of the packaging machine (1);
- filling the tube (4) of packaging material with a pourable food product by the filling device (11) of the packaging machine (1);
- transversally sealing and transversally cutting the filled tube (4) of packaging material along the transversal direction (TD) for forming said sealed packages (2) by the package forming apparatus (12) of the packaging machine (1); and
- pumping a cooling fluid through the at least one cooling duct (64a, 64b) of the anvil (22) of the transversal sealing system (20) by the service unit of the packaging machine (1);
wherein preferably said packaging material is free from any metallic layer, more preferably is aluminum-free.
